# EUROPEAN PATENT SPECIFICATION

(11) **EP 4 495 594 B1**
(45) Date of publication and mention of the grant of the patent: **18.03.2026**
(21) Application number: 23382746.8
(22) Date of filing: 20.07.2023
(51) Int. Cl.: G01N 29/04, G01N 29/22, G01N 29/27, G01N 29/28

(54) **A RAILWAY WHEEL ULTRASOUND INSPECTION DEVICE AND RAILWAY WHEEL MACHINING LATHE COMPRISING THE DEVICE**
EISENBAHNRAD-ULTRASCHALLINSPEKTIONSVORRICHTUNG UND EISENBAHNRADBEARBEITUNGSDREHMASCHINE MIT DER VORRICHTUNG
DISPOSITIF D'INSPECTION ULTRASONORE DE ROUE DE CHEMIN DE FER ET TOUR D'USINAGE DE ROUE DE CHEMIN DE FER COMPRENANT LE DISPOSITIF

(43) Date of publication of application: 22.01.2025
(73) Proprietor: Danobat S. Coop., 20870 Elgoibar Guipuzcoa (ES)
(72) Inventor: Berrizbeitia Maiztegui, José Luis, Elgoibar (Gipuzkoa) (ES); Zabaleta Lopez, Ion, Elgoibar (Gipuzkoa) (ES); Castro Salas, Ivan, Elgoibar (Gipuzkoa) (ES); Aizpurua Maestre, Iratxe, Elgoibar (Gipuzkoa) (ES)
(74) Representative: Balder IP Law, S.L.

(56) References cited:
- JP-B2- 3 484 031
- US-B1- 6 981 419
- US-B2- 11 674 929

## Description

### TECHNICAL FIELD

The present invention relates to railway wheel inspection devices for railway wheel machining lathes for maintenance operations for railway locomotive, coach and wagon wheels and wheelsets and to lathes comprising such inspection devices.

### STATE OF THE ART

Railways wheels and wheelsets are exposed during their lifetime to heavy wear and tear, as well as to accumulation of rust and solidified dirty grease resulting in damage to, deformations of and incrustations in their running surfaces leading to uneven rolling, increased rolling noise and increased tear of the wheel suspensions, which also affect the vehicle stability, vehicle safety, and passenger comfort. Therefore, periodical machining of worn railway wheels and wheelsets by lathes such as portal lathes and underfloor wheel lathes is carried out to reestablish the required properties of their running surfaces.

Nowadays, CNC (=Computer Numeric Control) lathes using computers and servomechanisms to regulate the rates of movement are used to machine railway wheels and wheelsets for maintenance purposes. The operation of such lathes involves taking measurements of the wheel profile including the shapes of the flange and running surface of a rotating worn railway wheel by means of sensor devices and machining the profile by cutting tools to reestablish its desired evenness within pre-established tolerances. In CNC lathes, the servomechanisms for elements such as the sensor devices, fastening mechanisms for holding the railway wheel or wheelset, the cutting tools, etc. are arranged on a bench and movement of the servomechanisms is computer-controlled.

US 6 981 419 relates to a sensor attachment mechanism that is attached directly to a guide wheel that is in direct contact with the rail and eliminates the requirement for a complex, adaptive mechanism between the host vehicle chassis and the rail. By maintaining close proximity to the guide wheel, the sensor tracks the lateral and vertical positions without the need for suspension mechanisms.

### DESCRIPTION OF THE INVENTION

A first aspect of the invention relates to a railway wheel ultrasound inspection device for inspecting rotating railway wheels by non-destructive testing comprising two ultrasound transducers arranged within a housing comprising a proximal wall. Each transducer is arranged in window penetrating through the proximal wall of the housing and each transducer mounted to a damper device floatingly arranged within the housing. The inspection device is designed to be placed such that the transducers face a back surface of a railway wheel such that the damper devices are enabled to resiliently hold the ultrasound transducers against the back surface of the railway wheel. According to the Invention, the inspection device further comprises a fastening member with a first end rigidly affixed to the housing and an opposite second end for rigidly fastening the fastening member to a shiftable tool holder of a railway wheel machining lathe, the inspection device is arranged on the tool holder such that it remains in a stationary working position when the railway wheel rotates.

A second aspect of the invention relates to a railway wheel machining lathe comprising at least one horizontally movable tool holder table comprising a plurality of vertically displaceable tool holders including a tool holder for holding a cutting tool for machining a surface of a rotating railway wheel wherein the machining lathe further comprises at least one shiftable tool holder connected to a railway wheel ultrasound inspection device as described and claimed in this specification.

In an embodiment of the invention, the shiftable tool holder comprises a telescope member which moves the housing linearly with regard to a position facing the back surface of the railway wheel.

Preferably, the inspection device comprises an acoustic coupling system for acoustically coupling the ultrasound transducers with the back surface of the railway wheel by providing a coupling agent between said back surface and the proximal surface of a proximal wall of the housing.

In an embodiment, the coupling system may comprise at least one fluid feeding line located inside the housing and having at least one coupling agent outlet penetrating through the proximal wall of the housing. Each coupling agent outlet may end in an open outlet channel extending axially in the proximal surface of said proximal wall.

Preferably, a number of spacers are provided to assure a constant distance between the housing and a back surface of a railway wheel.

Also preferably, the ultrasound transducers are connectable to an electric supply of the ultrasound equipment.

Additionally, the ultrasound transducers are preferably connectable to a data transmission line.

In a preferred embodiment which is useful for simultaneously inspecting two wheels of a railway wheelset, the underfloor railway wheel machining lathe comprises two shiftable tool holders provided in mirror-like arrangements at transversely opposite portions of the underfloor railway machining lathe whereby each shiftable tool holder is connected to one inspection device as described in this specification.

### BRIEF DESCRIPTION OF THE DRAWINGS

To complete the description and in order to provide a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1 shows a top perspective view of an embodiment of an underfloor wheel lathe.
Figure 2 shows a partial top perspective view of a holder table of the underfloor railway wheel machining lathe where a railway wheel (shown only partially) is positioned, as well as a tool holder on which an inspection device according to a first embodiment of the present invention is mounted.
Figure 3 shows a schematic elevational view of the distal side of the railway wheel, tool holder, and inspection device shown in figure 2.
Figure 4 shows a schematic elevational view of the right side of the inspection device shown in figure 3.
Figure 5 shows a bottom perspective view of the distal side of inspection device shown in figure 2.
Figure 6 shows an elevational view of the proximal side of the inspection device including its holding device shown in figure 5.
Figure 7 shows a perspective view of the inside of the inspection device shown in figure 6.
Figure 8 shows a perspective sectional view.
Figure 9 shows a side perspective sectional view along line A-A shown in figure 6.
Figures 10A and 10B schematically show views of two ways of operation of the inspection device according to the invention.

The reference signs appearing in these figures identify to the following elements:
- 1: ultrasound Inspection device
- 2: railway wheel
- 2a: back surface
- 2b: flange
- 2c: running surface
- 3: transducer
- 4: housing
- 4a: proximal surface
- 4b: proximal wall
- 4c: recessed inner wall portion
- 4f: extended portion
- 4g: recessed portion
- 4h: window
- 5: screws
- 6: fastening member
- 6a: first end
- 6b: second end
- 6c: hole
- 7: shiftable tool holder
- 7a: telescope member
- 7b: tool holder table
- 8: feeding line
- 8a: liquid outlet
- 8b: outlet depression
- 8d: fluid connector
- 9: second helicoidal spring
- 10: support roller
- 11: angular plate
- 11a: bended free end portion
- 11b: spring
- 11c: spring chamber
- 11d: transition passage
- 11e: head chamber
- 11f: connecting rod
- 11g: set screw
- 11h: second rod end
- 12: underfloor railway machining lathe
- 13: wheelset
- 13a: axle
- 14: pit
- 14a: stair
- 15: fix track
- 15a: retractile bridge track
- 16: floor
- 17: spacer
- 18: saw teeth
- 19: driving roller
- 20: cover body

### DESCRIPTION OF WAYS OF CARRYING OUT THE INVENTION

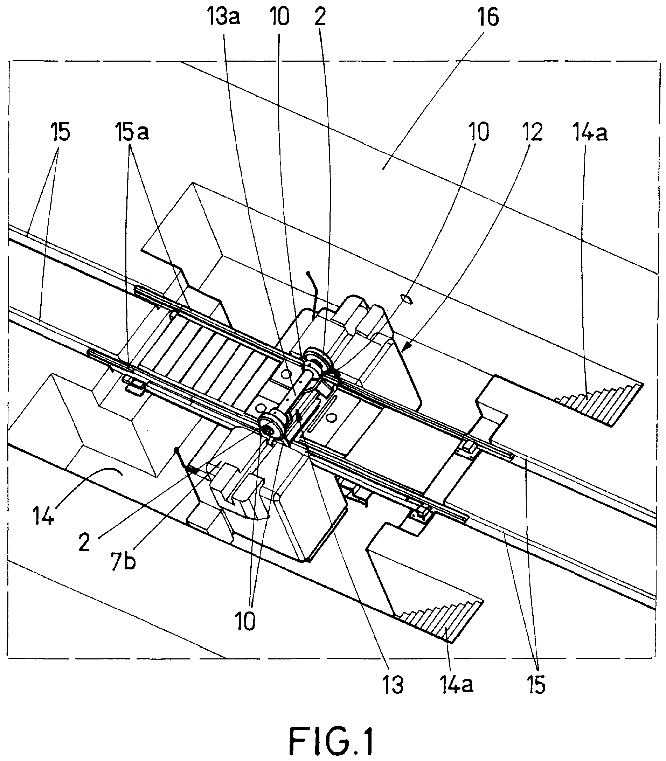

Figure 1 shows an underfloor railway machining lathe (12) designed for corrective maintenance of railway rolling surfaces and brake disks of railway sets without the need of dismantling the railway set from the railway vehicles, in order to regenerate the railway wheel profiles that have been subject to normal wear and deformation caused by the transit of the wheels on the railway tracks. To improve the understanding of figure 1, only the wheels (2) and axle (13a) of a wheelset (13) of a railway vehicle are shown in figure 1.

As shown in figure 1, the machining lathe (12) is installed in a pit (14) where there is an installation for a through track and anchorage for the machining lathe (12). The inside of the pit (14) is accessible by means of stairs (14a). The through-track is *per se* known and comprises two axially opposite fix railway tracks (15) fixed to the floor (16) at each end of the pit (14). The opposite railway tracks (15) are linked by an axially retractile bridge track (15a) on which the railway vehicle can roll over the pit (14) from one railway track (15) towards the opposite railway track (15) until its wheels reach a position on the retractile bride track (15a) where the wheels (2) of one wheelset (13) are located above respective pairs of liftable support rollers (10).

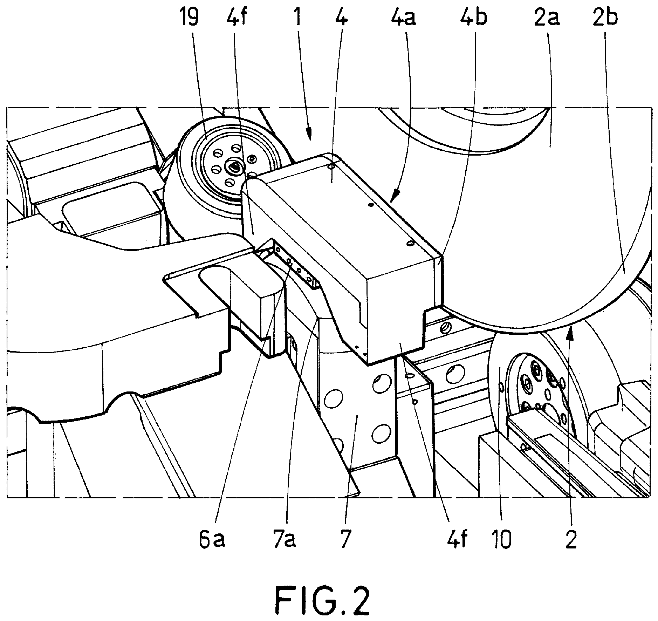

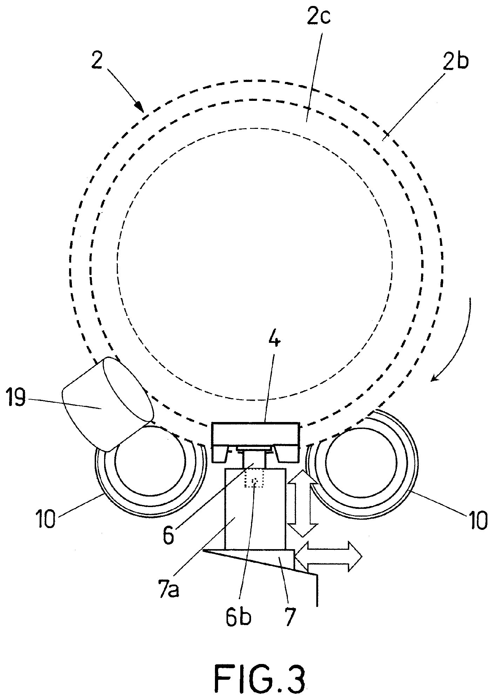

In this position, the axle box (not shown in the drawings) is clamped by *per se* known clamping mechanism (not shown in the drawings). The respective pairs of support rollers (10) are lifted to support the wheels (2) so that the running surfaces of the wheels (2) are located above the height of the upper surface of the rails of the retractile bridge track (15a), and the bridge track (15a) is axially retracted so that the respective running surfaces of the railway wheels (2) come to rest on the support rollers (10). The wheels (2) may then be rotated in a *per se* conventional manner by a driving roller (19 - cf. figures 2, 3) of a wheel rotating mechanism (not shown in the drawings) so that they rotate on the support rollers (10) for inspection, measuring and machining operations of the railway wheels (2). Once these operations have been completed, the axle box is unclamped, the tracks of the bridge track (15a) are repositioned into their positions over the pit (14) and the support rollers (10) are lowered so that the railway wheels (2) again rest on the bridge track (15a). The railway vehicle may then transit until the next wheels (2) to be inspected, measured and or machined becomes positioned on the bridge track (15a) over the above the respective pairs of the liftable support rollers (10).

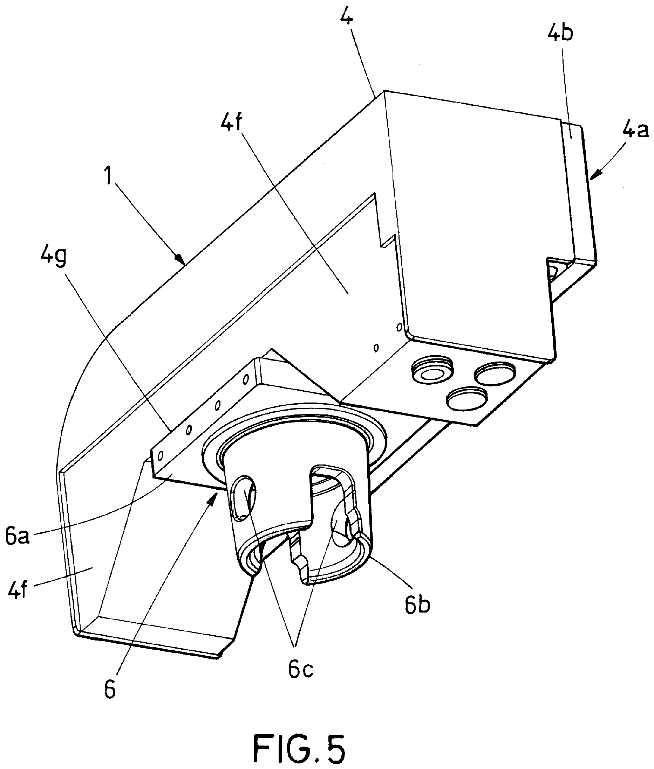

The railway wheel ultrasound inspection device (1) for inspecting a rotating railway wheel (2) (only partially shown in figure 1) is mounted to a shiftable tool holder (7) of the underfloor railway wheel machining lathe (12) shown in figure 1. The railway wheel (2) comprises a back surface (2a), a peripheral flange (2b) and a running surface (2c) resting on two lateral support rollers (10) such that the running surface (2c) of the railway wheel (2) is enabled to rest on the support rollers (10) and to rotate thereon. The inspection device (1) is arranged on the tool holder (7) such that it remains in a stationary working position when the railway wheel (2) rotates. The inspection device (1) comprises a housing (4) connected to the shiftable tool holder (7) of the railway wheel machining lathe (12). For simultaneously inspecting the two wheels (2) of the railway wheelset (13) shown in figure 1, two inspection devices (1) as that described herein with reference to figure 2-6 are provided in mirror-like arrangements on the underfloor railway machining lathe (12).

The housing (4) comprises a proximal wall (4b) with a proximal surface (4a) facing the back surface (2a) of the railway wheel (2). Two ultrasound transducers (not shown in figures 2 to 5) are arranged within the housing (4) next to the proximal surface (4a) of the proximal wall (4b), such that the ultrasound transducers are pushed towards the back surface (2a) of the railway wheel (2).

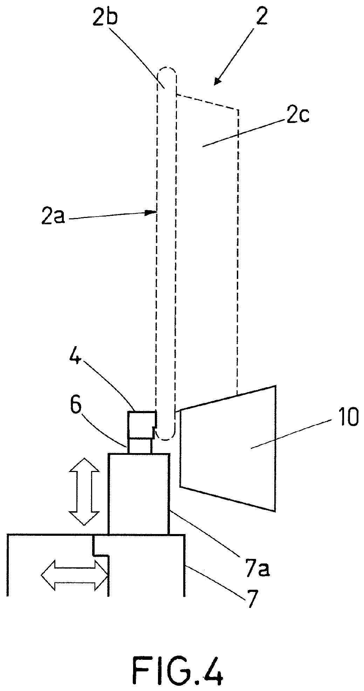

The shiftable tool holder (7) comprises a telescope member (7a) which vertically moves the housing (4) linearly with regard to a position facing the back surface (2a) of the railway wheel (2). Thereby, the inspection device (1) may be moved upwards and downwards with respect to the railway wheel (2), as shown by the vertical double arrows in figures 3-4. On the other hand, the tool holder (7) may be horizontally moved forward and backwards along a longitudinal axis of the machining lathe (12) by means of a *per se* conventional mechanism as shown by the horizontal double arrows in figure 3-4. In addition, the tool holder (7) may, when a tool holder table (7b) to which the tool holder (7) is mounted, move transversally to the longitudinal axis of the machining lathe (12), shift from left to right, as shown by the horizontal double arrow in figure 4. Thereby, the inspection device (7) may be moved to any desired position.

As particularly shown particularly in figures 3, 5 and 6, the inspection device (1) further comprises a fastening member (6) rigidly affixed to the housing (4) and rigidly fixable to the telescope member (7a) of the shiftable tool holder (7) of the railway wheel machining lathe (12). The first end (6a) of the fastening member (6) is affixed to the housing (4) and the second end (6b) of the fastening member (6) is rigidly fixable to the telescope member (7a) of the shiftable tool holder (7). The second end (6b) of the fastening member (6) is installed with positive locking within the telescope member (7a) and blocked therein by means of a transversal bolt (not shown in the drawings) fitted in a pair of opposite holes (6c) provided in opposite wall portions of the second end (6b) of the fastening member (6).

In the first embodiment shown in figure 2-6, the housing (4) comprises a bottom side with a lower central recessed portion (4g) located between two lower extended portions (4f). The lower extended portions (4f) are designed to offer space for internal elements, such as cables, of the ultrasound inspection device (1), and to provide a compact design of the housing (4) which avoids interfering with elements of the machining lathe (12). The first end (6a) of the fastening member (6) is affixed to said recessed portion (4g) of the housing (4).

For ultrasonic measuring, the proximal surface (4a) of the housing (4) is positioned to face and contact the back surface (2a) of the railway wheel (2). The proximal surface (4a) with the ultrasound transducers is pushed (cf. horizontal double arrow in figure 4) towards the back surface (2a) of the railway wheel (2). Thereby, the inspection device (1) is pushed towards the rotating railway wheel (2), at the same time that it enables the inspection device (1) to maintain a stationary position when the railway wheel (2) rotates.

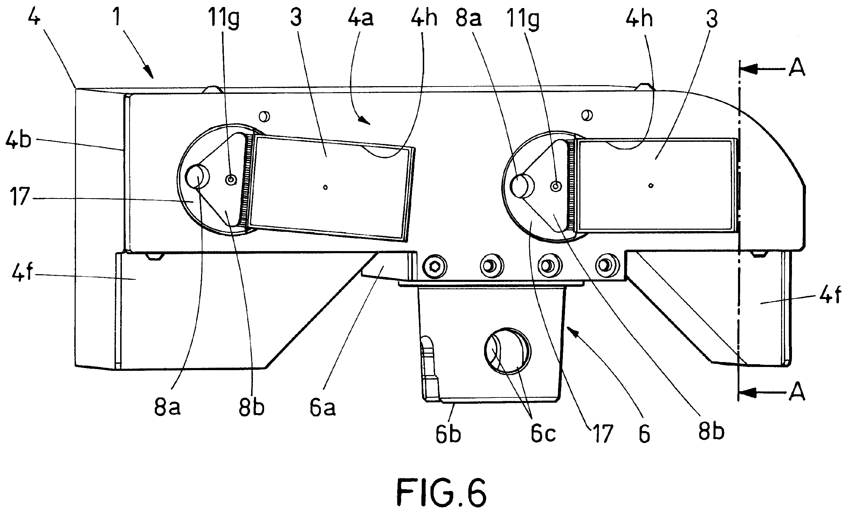

As shown in figure 6, a number of spacers (17) are provided on the proximal surface (4a) of the housing (4) to assure a constant distance between the housing (4) and the back surface (2a) of the rotating railway wheel (2).

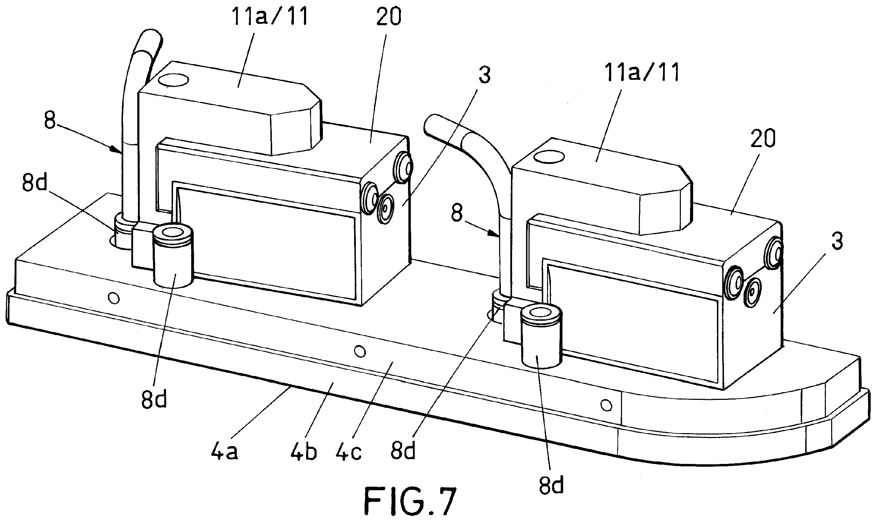

As shown in figures 6 and 7, two ultrasound transducers (3) are arranged within a housing (4).

As shown in figures 6, 7 and 8, each transducer (3) is arranged in a rectangular window (4h) within the proximal wall (4b) of the housing (4). The proximal wall (4b) of the housing (4) comprises a recessed inner wall portion (4c) and a L-shaped distributor body (20).

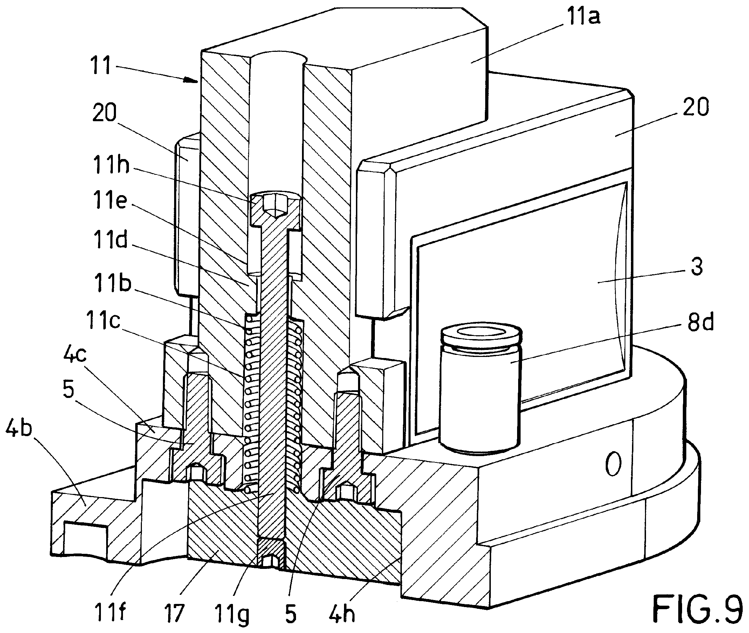

Each transducer (3) is floatingly retained in its window (4h) by an angular plate (11) which includes a damper device. Each angular plate (11) is fixed to the recessed inner wall portion (4c) of the proximal wall (4b) of the housing (4). The damper device will be more detailed described herein after with reference to figure 9.

Each angular plate (11) comprises a bended free end portion (11a) opposite to the recessed inner wall portion (4c).

A L-shaped cover body (20) with respective free ends is located between the free end portion (11a) of the angular plate (11) and the transducer (3).

The ultrasound transducers (3) are connected each to an UT connector connected to respective cables (not shown in the figures) through which they are connectable to an electric supply and to a data transmission unit (not shown in the drawings of the ultrasound inspection device (1).

The inspection device (1) also comprises two acoustic coupling systems for acoustically coupling each of the ultrasound transducers (3) with the back surface (2a) of the railway wheel (2) by providing a coupling agent between the ultrasound transducer (3) in the windows (4h) and said back surface (2a) of the railway wheel (2).

Each coupling system comprises a fluid feeding line (8) located inside the housing (4) and includes one or more coupling agent liquid outlets (8a) penetrating through the proximal wall (4b) of the housing (4). Each coupling agent liquid outlet (8a) ends in an open outlet depression (8b) extending axially in the proximal surface (4a) of the proximal wall (4b) of the housing (4). The fluid feeding line (8) is connected to a fluid connector (8d) which is attached to the inner wall portion (4c). The feeding line (8) is also connected to a tank through a for coupling agent liquid and to a liquid pump (not shown in the drawings)

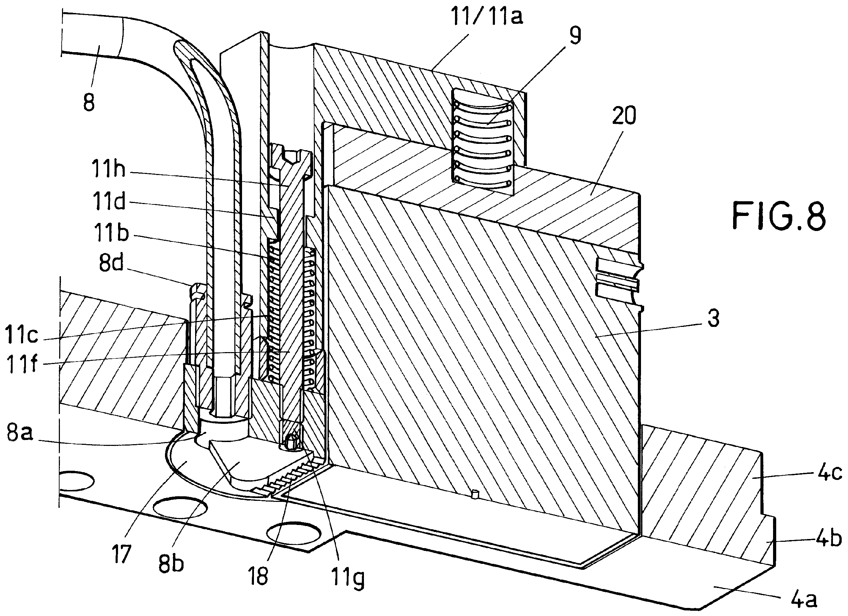

Fluid flows through the tube (8), passes through the connector (8d) and reaches the spacer (17). The fluid accumulates in the outlet depression (8b) and it is dosed by means of the saw teeth (18) shown in figure 8, so in this way, fluid reaches the transducer (3) in a homogeneous way. Therefore, the spacers (17) have double purpose, for contacting with the wheel (2) and to dispense the liquid or gel.

As stated above, figure 9 shows the damper device of the inspection device in more detail. The inside of the main portion of the angular plate (11) comprises a spring chamber (11c) open towards the window (4h) where the transducer (3) is located, a transition passage (11d) and a head chamber (11e) which are in axial alignment with each other. The inner diameters of the spring chamber (11c) and the head chamber (11e) are larger than the inner diameter of the transition passage (11d).

A connecting rod (11f) is slidably located in the spring chamber (11c), the transition passage (11d) and the head chamber (11e). The connecting rod (11f) has an outer diameter which corresponds to the inner diameter of the transition passage (11d), a set screw (11g) which trespasses and it is fixed to the spacer (17) and a second end (11h) which has an outer diameter corresponding to the inner diameter of the head chamber (11e). A first end of a helicoidal spring (11b) presses on an inner surface portion of the spacer (17). The helicoidal spring (11b) is arranged in the spring chamber (11c) and surrounds the connecting rod (11f). The second end of the helicoidal spring (11b) abuts against and is retained by a peripheral step formed between the spring chamber (11c) and the transition passage (11d).

As shown in figure 8, a second helicoidal spring (9) is provided between the bended portion (11a) and the cover body (20), so that this second helicoidal spring (9) contributes to the buoyancy system and to support of the transducer.

As shown in figure 9, the angular plate (11) is attached to the inner wall portion (4c), by means of two screws (5) and to the spacer by the connecting rod (11f). In turn, element (11g) contact against element (11f) to maintain the correct position. The connecting rod (11f) moves up and down in the defined pockets to provide buoyancy to the system. In addition, angular plate (11) is tethered to cover body (20) (which is tethered to the transducer (3)) using the spring (9) to maintain the system's buoyancy. In summary, the spacer (17) and the transducer (3) are moved by the two springs (11b,9) and the connecting rod (11) is the one that remains fixed to the base.

This arrangement of the damper device allows that each transducer (3) is floatingly held in its respective window (4h) in the proximal surface (4a) of the proximal wall (4b) of the housing (4) so that, when the transducer (3) passes over irregularities such as protuberances and deformations on the back surface (2a) of the railway wheel (2), the transducer (3) adapts its position thereto and damages to the transducer are prevented.

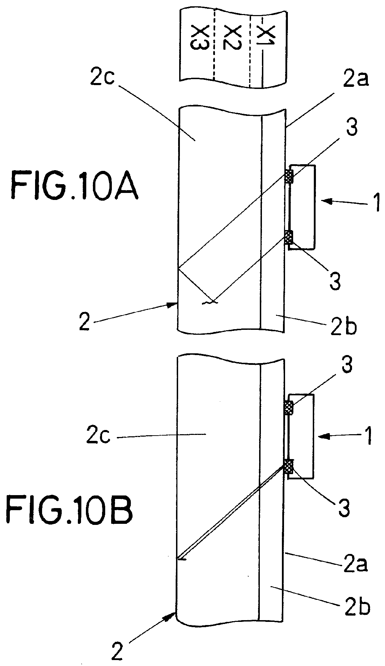

The operation of the inspection device shown in figures 1 to 9 will be hereinafter described with reference to figures 10A and 10B.

In the operation mode shown in figure 10A one transducer (3) is used as an ultrasound transmitter and the other transducer (3) is used as a receiver. The configuration in this operation mode is used to detect FBH which are present at a depth beneath the rolling surface of the wheel (2).

In the operation mode shown in figure 10B, only one i.e., the front transducer (3) is used as transmitter and receiver. This configuration in this operation is used to detect notches in the edge of the rolling surface of the wheel (2).

## Claims

1. A railway wheel ultrasound inspection device (1) for inspecting rotating railway wheels (2) by non-destructive testing comprising two ultrasound transducers (3) arranged within a housing (4) comprising a proximal wall (4b), each transducer (3) arranged in window (4h) penetrating through the proximal wall (4b) of the housing
**characterized in that**
the inspection device (1) further comprises two damper devices floatingly arranged within the housing (4) and a shiftable tool holder (7) and
**in that** each transducer (3) is mounted on one damper device,
the inspection device (1) designed to be placed such that the transducers face a back surface (2a) of a railway wheel (2) such that the damper devices are enabled to resiliently hold the ultrasound transducers (3) against the back surface (2a) of the railway wheel (2), the inspection device (1) further comprising a fastening member (6) with a first end (6a) rigidly affixed to the housing (4) and an opposite second end (6b) for rigidly fastening the fastening member (6) to the shiftable too holder (7) of a railway wheel machining lathe (12), and **in that** the inspection device (1) is designed to be arranged on the shiftable tool holder (7) such that it remains in a stationary working position when the railway wheel (2) rotates.

2. A railway wheel ultrasound inspection device according to claim 1, wherein the shiftable tool holder (7) comprises a telescope member (7a) which moves the housing (4) linearly with regard to a position facing the back surface (2a) of the railway wheel (2).

3. A railway wheel ultrasound inspection device according to claim 1 or 2, wherein the inspection device (1) comprises an acoustic coupling system for acoustically coupling the ultrasound transducers (3) with the back surface (2a) of the railway wheel (2) by providing a coupling agent between said back surface (2a) and the proximal surface (4a) of an proximal wall (4b) of the housing (4).

4. A railway wheel ultrasound inspection device according to claim 3, wherein the coupling system comprises at least one fluid feeding line (8) located inside the housing (4) and at least one coupling agent outlet (8a) penetrating through the proximal wall (4b) of the housing (4).

5. A railway wheel ultrasound inspection device according to claim 4, wherein each coupling agent outlet (8a) ends in an open outlet channel (8b) extending axially in the proximal surface (4a) of said proximal wall (4b).

6. A railway wheel ultrasound inspection device according to any of claims 1 to 5, wherein ultrasound transducers (3) are connectable to an electric supply.

7. A railway wheel ultrasound inspection device according to any of claims 1 to 6, wherein ultrasound transducers (3) are connectable to a data transmission line.

8. A railway wheel ultrasound inspection device according to any of claims 1 to 7, wherein at least one damping device comprises:
an angular plate (11) comprising a main portion fixed to a distal surface portion of the proximal wall (4b) of the housing (4) and a bended free end portion (11a) orthogonally extending from the main portion at a distance from the proximal wall (4b);
a spring chamber (11c) open towards the window (4h) where the transducer (3) is located, a transition passage (11d) and a head chamber (11e) the spring chamber (11c), the transition passage (11d) and the head chamber (11e) being located in the inside of said main portion and connected to each other in axial alignment, and the spring chamber (11c) and the head chamber (11e) having inner diameters which are larger than the inner diameter of the transition passage (11d);
a connecting rod (11f) slidably located in the spring chamber (11c), the transition passage (11d) and the head chamber (11e), the connecting rod (11d) having an outer diameter which corresponds to the inner diameter of the transition passage and comprising a first rod end (11g) connected to the transducer (3) and a second end (11h) which has an outer diameter corresponding to the inner diameter of the head chamber (11e);
a helicoidal spring (11b) with a first end abutting against an inner surface portion the transducer (3) and surrounding the connecting rod (11f), arranged in the spring chamber (11c) and with a second end of the helicoidal spring (11b) abutting against a peripheral step formed between the spring chamber (11c) and the transition passage (11d).

9. A railway wheel machining lathe (12) comprising at least one horizontally movable tool holder table (7b) comprising a plurality of vertically displaceable tool holders, **characterized in that** it further comprises at least one shiftable tool holder (7) connected to a railway wheel ultrasound inspection device (1) as defined in any of claims 1 to 9.

10. A railway wheel machining lathe according to claim 9, wherein the shiftable tool holder (7) comprises a telescope member (7a) to which the second end (6b) of the fastening member (6) is mounted.

11. A railway wheel machining lathe (12) according to claim 9 or 10, useful for simultaneously inspecting two wheels (2) of a railway wheelset (13), wherein the machining lathe (12) comprises two shiftable tool holders (7) provided in mirror-like arrangements at axially opposite portions of the underfloor railway machining lathe (12) and each shiftable tool holder (7) is connected to one inspection device (1) as defined in any of claims 1 to 9.

## Patentansprüche

1. Eisenbahnrad-Ultraschallprüfvorrichtung (1) zur zerstörungsfreien Prüfung rotierender Eisenbahnräder (2), mit zwei Ultraschallwandlern (3), die in einem Gehäuse (4) mit einer proximalen Wand (4b) angeordnet sind, wobei jeder Wandler (3) in einem Fenster (4h) angeordnet ist, das die proximale Wand (4b) des Gehäuses durchsetzt, **dadurch gekennzeichnet, dass** die Prüfvorrichtung (1) ferner zwei Dämpfungsvorrichtungen, die schwebend innerhalb des Gehäuses (4) angeordnet sind, und einen verschiebbaren Werkzeughalter (7) umfasst, und dadurch, dass jeder Wandler (3) an einer Dämpfungsvorrichtung angebracht ist, wobei die Prüfvorrichtung (1) so ausgelegt ist, dass sie derart angeordnet werden kann, dass die Wandler einer Rückseite (2a) eines Eisenbahnrades (2) zugewandt sind, so dass die Dämpfungsvorrichtungen die Ultraschallwandler (3) federnd gegen die Rückseite (2a) des Eisenbahnrades (2) halten können, wobei die Prüfvorrichtung (1) ferner ein Befestigungselement (6) mit einem ersten Ende (6a), das starr mit dem Gehäuse (4) verbunden ist, und ein gegenüberliegendes zweites Ende (6b) zum starren Befestigen des Befestigungselements (6) an dem verschiebbaren Werkzeughalter (7) einer Eisenbahnrad-Bearbeitungsdrehmaschine (12) aufweist, und dadurch, dass die Prüfvorrichtung (1) eingerichtet ist, so dass sie derart auf dem verschiebbaren Werkzeughalter (7) angeordnet werden kann, dass sie in einer stationären Arbeitsposition bleibt, wenn sich das Eisenbahnrad (2) dreht.

2. Eisenbahnrad-Ultraschallprüfvorrichtung nach Anspruch 1, wobei der verschiebbare Werkzeughalter (7) ein Teleskopelement (7a) umfasst, das das Gehäuse (4) linear in Bezug auf eine der Rückseite (2a) des Eisenbahnrades (2) zugewandte Position bewegt.

3. Eisenbahnrad-Ultraschallprüfvorrichtung gemäß Anspruch 1 oder 2, wobei die Prüfvorrichtung (1) ein akustisches Kopplungssystem umfasst, um die Ultraschallwandler (3) akustisch mit der Rückseite (2a) des Eisenbahnrades (2) zu koppeln, indem ein Kopplungsmittel zwischen der Rückseite (2a) und der proximalen Fläche (4a) einer proximalen Wand (4b) des Gehäuses (4) vorgesehen wird.

4. Eisenbahnrad-Ultraschallprüfvorrichtung gemäß Anspruch 3, wobei das Kopplungssystem zumindest eine innerhalb des Gehäuses (4) angeordnete Fluidzufuhrleitung (8) und zumindest einen die proximale Wand (4b) des Gehäuses (4) durchsetzenden Kopplungsmittelauslass (8a) umfasst.

5. Eisenbahnrad-Ultraschallprüfvorrichtung gemäß Anspruch 4, wobei jeder Kopplungsmittelauslass (8a) in einem offenen Auslasskanal (8b) endet, der sich axial in der proximalen Fläche (4a) der proximalen Wand (4b) erstreckt.

6. Eisenbahnrad-Ultraschallprüfvorrichtung gemäß einem der Ansprüche 1 bis 5, wobei die Ultraschallwandler (3) an eine Stromversorgung anschließbar sind.

7. Eisenbahnrad-Ultraschallprüfvorrichtung gemäß einem der Ansprüche 1 bis 6, wobei die Ultraschallwandler (3) an eine Datenübertragungsleitung anschließbar sind.

8. Eisenbahnrad-Ultraschallprüfvorrichtung gemäß einem der Ansprüche 1 bis 7, wobei mindestens eine Dämpfungsvorrichtung umfasst: eine Winkelplatte (11) umfassend einen Hauptabschnitt, der an einem distalen Oberflächenabschnitt der proximalen Wand (4b) des Gehäuses (4) befestigt ist, und einen gebogenen freien Endabschnitt (11a), der sich orthogonal vom Hauptabschnitt in einem Abstand von der proximalen Wand (4b) erstreckt; eine Federkammer (11c), die zum Fenster (4h) hin offen ist, in der sich der Wandler (3) befindet, einen Übergangskanal (11d) und eine Kopfkammer (11e), wobei sich die Federkammer (11c), der Übergangskanal (11d) und die Kopfkammer (11e) im Inneren des Hauptabschnitts befinden und in axialer Ausrichtung miteinander verbunden sind, wobei die Federkammer (11c) und die Kopfkammer (11e) Innendurchmesser aufweisen, die größer sind als der Innendurchmesser des Übergangskanals (11d); eine Verbindungsstange (11f), die verschiebbar in der Federkammer (11c), dem Übergangskanal (11d) und der Kopfkammer (11e) angeordnet ist, wobei die Verbindungsstange (11d) einen Außendurchmesser aufweist, der dem Innendurchmesser des Übergangskanals entspricht, und ein erstes Stangenende (11g), das mit dem Wandler (3) verbunden ist aufweist, und ein zweites Ende (11h) aufweist, dessen Außendurchmesser dem Innendurchmesser der Kopfkammer (11e) entspricht; eine Schraubenfeder (11b) mit einem ersten Ende, das an einem Innenflächenabschnitt des Wandlers (3) anliegt und die Verbindungsstange (11f) umgibt, und das in der Federkammer (11c) angeordnet ist, und wobei ein zweites Ende der Schraubenfeder (11b) an einer zwischen der Federkammer (11c) und dem Übergangskanal (11d) ausgebildeten Umfangsstufe anliegt.

9. Eisenbahnrad-Bearbeitungsdrehmaschine (12), die mindestens einen horizontal beweglichen Werkzeughaltertisch (7b) mit einer Vielzahl von vertikal verschiebbaren Werkzeughaltern umfasst, **dadurch gekennzeichnet, dass** sie ferner mindestens einen verschiebbaren Werkzeughalter (7) umfasst, der mit einer Ultraschallprüfvorrichtung (1) für Eisenbahnräder gemäß einem der Ansprüche 1 bis 9 verbunden ist.

10. Eisenbahnrad-Bearbeitungsdrehmaschine nach Anspruch 9, wobei der verschiebbare Werkzeughalter (7) ein Teleskopelement (7a) umfasst, an dem das zweite Ende (6b) des Befestigungselements (6) angebracht ist.

11. Eisenbahnrad-Bearbeitungsdrehmaschine (12) nach Anspruch 9 oder 10, die zur gleichzeitigen Prüfung von zwei Rädern (2) eines Eisenbahnradsatzes (13) geeignet ist, wobei die Bearbeitungsdrehmaschine (12) zwei verschiebbare Werkzeughalter (7) umfasst, die spiegelbildlich an axial gegenüberliegenden Abschnitten der Unterflur-Eisenbahnbearbeitungsdrehmaschine (12) angeordnet sind, und jeder verschiebbare Werkzeughalter (7) mit einer Prüfvorrichtung (1) gemäß einem der Ansprüche 1 bis 9 verbunden ist.

## Revendications

1. Dispositif d'inspection ultrasonore de roue de chemin de fer (1) pour inspecter les roues de chemin de fer rotatives (2) par test non destructeur comprenant deux transducteurs ultrasonores (3) agencés à l'intérieur d'un boîtier (4) comprenant une paroi proximale (4b), chaque transducteur (3) étant agencé dans une fenêtre (4h) pénétrant à travers la paroi proximale (4b) du boîtier, **caractérisé en ce que** :
le dispositif d'inspection (1) comprend en outre deux dispositifs d'amortissement agencés, de manière flottante, à l'intérieur du boîtier (4) et un porte-outil déplaçable (7), et **en ce que** chaque transducteur (3) est monté sur un dispositif d'amortissement,
le dispositif d'inspection (1) étant conçu pour être placé de sorte que les transducteurs sont orientés vers une surface arrière (2a) d'une roue de chemin de fer (2) de sorte que les dispositifs d'amortissement sont en mesure de maintenir, de manière résiliente, les transducteurs ultrasonores (3) contre la surface arrière (2a) de la roue de chemin de fer (2), le dispositif d'inspection (1) comprenant en outre un élément de fixation (6) avec une première extrémité (6a) rigidement fixée au boîtier (4) et une seconde extrémité (6b) opposée pour fixer, rigidement, l'élément de fixation (6) au porte-outil déplaçable (7) d'un tour d'usinage de roue de chemin de fer (12), et **en ce que** le dispositif d'inspection (1) est conçu pour être agencé sur le porte-outil déplaçable (7) de sorte qu'il reste dans une position de travail fixe lorsque la roue de chemin de fer (2) tourne.

2. Dispositif d'inspection ultrasonore de roue de chemin de fer selon la revendication 1, dans lequel le porte-outil déplaçable (7) comprend un élément télescopique (7a) qui déplace le boîtier (4) de manière linéaire par rapport à une position faisant face à la surface arrière (2a) de la roue de chemin de fer (2).

3. Dispositif d'inspection ultrasonore de roue de chemin de fer selon la revendication 1 ou 2, dans lequel le dispositif d'inspection (1) comprend un système de couplage acoustique pour coupler, par voie acoustique, les transducteurs ultrasonores (3) avec la surface arrière (2a) de la roue de chemin de fer (2) en prévoyant un agent de couplage entre ladite surface arrière (2a) et la surface proximale (4a) d'une paroi proximale (4b) du boîtier (4).

4. Dispositif d'inspection ultrasonore de roue de chemin de fer selon la revendication 3, dans lequel le système de couplage comprend au moins une ligne d'alimentation en fluide (8) située à l'intérieur du boîtier (4) et au moins une sortie d'agent de couplage (8a) pénétrant à travers la paroi proximale (4b) du boîtier (4).

5. Dispositif d'inspection ultrasonore de roue de chemin de fer selon la revendication 4, dans lequel chaque sortie d'agent de couplage (8a) se termine par un canal de sortie ouvert (8b) s'étendant, de manière axiale, dans la surface proximale (4a) de ladite paroi proximale (4b).

6. Dispositif d'inspection ultrasonore de roue de chemin de fer selon l'une quelconque des revendications 1 à 5, dans lequel les transducteurs ultrasonores (3) peuvent être raccordés à une alimentation électrique.

7. Dispositif d'inspection ultrasonore de roue de chemin de fer selon l'une quelconque des revendications 1 à 6, dans lequel les transducteurs ultrasonores (3) peuvent être raccordés à une ligne de transmission de données.

8. Dispositif d'inspection ultrasonore de roue de chemin de fer selon l'une quelconque des revendications 1 à 7, dans lequel au moins un dispositif d'amortissement comprend :
une plaque angulaire (11) comprenant une partie principale fixée à une partie de surface distale de la paroi proximale (4b) du boîtier (4) et une partie d'extrémité libre cintrée (11a) s'étendant de manière orthogonale à partir de la partie principale à une distance de la paroi proximale (4b) ;
une chambre à ressort (11c) ouverte vers la fenêtre (4h) où le transducteur (3) est situé, un passage de transition (11d) et une chambre supérieure (11e), la chambre à ressort (11c), le passage de transition (11d) et la chambre supérieure (11e) étant positionnés à l'intérieur de ladite partie principale et raccordés entre eux en alignement axial, et la chambre à ressort (11c) et la chambre supérieure (11e) ayant des diamètres internes qui sont supérieurs au diamètre interne du passage de transition (11d) ;
une tige de raccordement (11f) positionnée de manière coulissante dans la chambre à ressort (11c), le passage de transition (11d) et la chambre supérieure (11e), la tige de raccordement (11d) ayant un diamètre externe qui correspond au diamètre interne du passage de transition et comprenant une première extrémité de tige (11g) raccordée au transducteur (3) et une seconde extrémité (11h) qui a un diamètre externe correspondant au diamètre interne de la chambre supérieure (11e) ;
un ressort hélicoïdal (11b) avec une première extrémité venant en butée contre une partie de surface interne le transducteur (3) et entourant la tige de raccordement (11f), agencé dans la chambre à ressort (11c) et avec une seconde extrémité du ressort hélicoïdal (11b) venant en butée contre un gradin périphérique formé entre la chambre à ressort (11c) et le passage de transition (11d).

9. Tour d'usinage de roue de chemin de fer (12) comprenant au moins une table porte-outil (7b) horizontalement mobile comprenant une pluralité de porte-outils verticalement déplaçables, **caractérisé en ce qu'**il comprend en outre au moins un porte-outil déplaçable (7) raccordé à un dispositif d'inspection ultrasonore de roue de chemin de fer (1) selon l'une quelconque des revendications 1 à 9.

10. Tour d'usinage de roue de chemin de fer selon la revendication 9, dans lequel le porte-outil déplaçable (7) comprend un élément télescopique (7a) sur lequel la seconde extrémité (6b) de l'élément de fixation (6) est montée.

11. Tour d'usinage de roue de chemin de fer (12) selon la revendication 9 ou 10, utile pour inspecter simultanément deux roues (2) d'un train de roues de chemin de fer (13), dans lequel le tour d'usinage (12) comprend deux porte-outils déplaçables (7) prévus dans des agencements en forme de miroir au niveau des parties axialement opposées du tour d'usinage de chemin de fer au sol (12) et chaque porte-outil déplaçable (7) est raccordé au un dispositif d'inspection (1) selon l'une quelconque des revendications 1 à 9.
